# EUROPEAN PATENT SPECIFICATION

(11) **EP 2 897 462 B1**
(45) Date of publication and mention of the grant of the patent: **04.12.2019**
(21) Application number: 13766849.7
(22) Date of filing: 13.09.2013
(51) Int. Cl.: A23B 7/144

(54) **METHODS OF HANDLING PERSIMMONS**
VERFAHREN ZUR HANDHABUNG VON DATTELPFLAUMEN
PROCÉDÉS DE MANIPULATION DES KAKIS

(30) Priority: 20.09.2012 US 201261703286 P
(43) Date of publication of application: 29.07.2015
(73) Proprietor: AgroFresh Inc., Philadelphia, PA 19106 (US)
(72) Inventor: EDAGI, Fernando K., Davis, CA 95618 (US); MIR, Nazir, Somerset, NJ 08873 (US); MCCASKEY, Evan, Ambler, PA 19002 (US); MCGEE, Robert L., Midland, MI 48642 (US); MENNING, Bruce, Midland, MI 48640-2133 (US)
(74) Representative: HGF Limited
(86) International application number: PCT/US2013/059658
(87) International publication number: WO 2014/046976

(56) References cited:
- WO-A1-2011/082059
- CN-A- 102 613 285
- US-A1- 2011 014 334
- DATABASE WPI Week 201103 Thomson Scientific, London, GB; AN 2010-Q49421 XP002716454, -& KR 2010 0129409 A (KYUNG SANG NAM DO) 9 December 2010 (2010-12-09)
- Hyun-Sug Choi ET AL: "Storability of 'Fuyu' sweet persimmons as affected by 1-MCP and MAP at low temperature", Journal of Food Agriculture & Environmentnet Journal of Food Agriculture & Environment, 31 January 2012 (2012-01-31), pages 189-192, XP055088278, Retrieved from the Internet: URL:http://wflpublisher.net/download/journ als/2012-issue_1/f37.pdf [retrieved on 2013-11-14]
- Ayse Tulin Oz: "Combined effects of 1-methyl cyclopropene (1-MCP) and modified atmosphere packaging (MAP) on different ripening stages of persimmon fruit during storage", African Journal of Biotechnology, 31 January 2011 (2011-01-31), pages 807-814, XP055088491, DOI: 10.5897/AJB10.1115 Retrieved from the Internet: URL:http://www.academicjournals.org/articl e/article1380795032_Oz.pdf [retrieved on 2013-11-15]
- ALFREDO JOSUE ET AL: "Temperature, low oxygen and 1-methylcyclepropene on the quality conservation of 'Fuyu' persimmon", CIENCIA RURAL, vol. 37, no. 5, 31 October 2007 (2007-10-31), pages 1287-1294, XP055088489,

## Description

### FIELD OF THE INVENTION

This invention is generally related to the field of agriculture, and more specifically the field of post-harvest handling of produce.

### BACKGROUND OF THE INVENTION

A persimmon tree is a plant of Ebenaceae which grows or is cultivated in the tropic and temperate zones of the world including Japan and China. It is said that Ebenaceae plants are classified into seven genuses and 20 species and fruits of some kinds of persimmon trees contain, even after their maturity, persimmon tannine. The persimmon tannine is known to be available for some medicines, mordanting and leather-tanning agents.

Persimmon *(Diasoyros kaki),* which is a nutritious and alkaline fruit, contains about 11-15% of sugar such as fructose and glucose, about 20-50 mg/100 g (edible portion) of vitamin C, which is about 5-12 times as much as that of apple, and more minerals than apple. Additionally, persimmon contains a great quantity of vitamin A and tannic acid, the latter of which produces a bitter taste. Especially, tannic acid is known to remedy diarrhea or stomach disorder, as well as lower the blood pressure without affecting an electrocardigram. Many of research in persimmon, as both food and medicine, are actively on-going.

Alfredo Josue et al, Ciencia Rural, vol 37, no. 5, (2007), pp 1287-1294, describes the evaluation of the effect of different levels of O₂, CO₂, and the application of 1-MCP on the quality of "Fuyu" persimmon stored in controlled atmosphere at 10°C.

CN102613285 discloses a crisp-keeping and freshness-keeping method for persimmons. KR20100129409 describes a fruit softening inhibitor and an inhibition method of fruit softening. US2011014334 discloses a method of treating produce comprising the step of exposing said produce to an atmosphere containing (i) 100 ppb to 5,000 ppb by volume of one or more cyclopropene compound, and (ii) ethylene, wherein the ratio of ethylene concentration by volume to cyclopropene concentration by volume is from 0.1:1 to 8:1

Ayse Tulin Oz, African Journal of Biotechnology, (2011), pages 807-814, describes the combined effects of 1-methyl cyclopropene (1-MCP) applications and modified atmosphere packaging (MAP) to improve the storability of two different harvest maturity stages of 'Harbiye' persimmon fruits during 90 days storage at 1°C.

Hyun-Sug Choi et al, Journal of Food Agriculture & Environment (2012) describe an investigation into the storability of 'Fuyu' sweet persimmons as affected by 1-MCP and MAP at low temperature.

Amount of persimmon produced in domestic was about 155,111 ton in 1992, but has been increasing yearly to about 239,570 ton in 1997. In addition, cultivation area of persimmon is increasing yearly. Because persimmon has a higher profitability than other fruit, e.g., apple, significant increasing of its cultivation area is expected. Thus, there remains a need for effective and efficient method to handle and/or preserve persimmon for use as both food and medicine.

### SUMMARY OF THE INVENTION

This invention is based on unexpected synergistic effect of a cyclopropene compound and a modified atmosphere package to extend shelf life and/or storage for persimmons.

In one aspect, provided is a method of handling persimmons comprising exposing the persimmons to an atmosphere that contains a cyclopropene compound, wherein the persimmons are in a modified-atmosphere package during exposure to the cyclopropene compound and the persimmons remain in the modified atmosphere package after the exposure for at least two hours, and further wherein the modified-atmosphere package is constructed so that the transmission rate of oxygen for the entire package is from 200 to 40,000 cubic centimeters per day per kilogram of persimmons, and the cyclopropene compound during the exposure is at a concentration between 10 ppb and 5 ppm by volume of the atmosphere.

In one embodiment, the transmission rate of carbon dioxide for the entire package is from 500 to 150,000 cubic centimeters per day per kilogram of persimmons. In another embodiment, the persimmons remain in the modified atmosphere package after the exposure for at least ten hours, twenty hours, forty hours, four days, seven days, or ten days. In another embodiment, the cyclopropene compound is in a formulation with a molecular encapsulating agent. In a further embodiment, the cyclopropene compound comprises 1-methylcyclopropene (1-MCP). In another embodiment, the molecular encapsulating agent comprises alpha-cyclodextrin, beta-cyclodextrin, gamma-cyclodextrin, or combinations thereof. In a further embodiment, the encapsulated agent comprises alpha-cyclodextrin.

In one embodiment, the cyclopropene compound is of the formula: 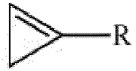 wherein R is a substituted or unsubstituted alkyl, alkenyl, alkynyl, cycloalkyl, cycloalkylalkyl, phenyl, or naphthyl group; wherein the substituents are independently halogen, alkoxy, or substituted or unsubstituted phenoxy.

In a further embodiment, R is C₁₋₈ alkyl. In another embodiment, R is methyl.

In another embodiment, the cyclopropene compound is of the formula: 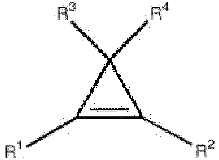 wherein R¹ is a substituted or unsubstituted C₁-C₄ alkyl, C₁-C₄ alkenyl, C₁-C₄ alkynyl, C₁-C₄ cylcoalkyl, cylcoalkylalkyl, phenyl, or napthyl group; and R², R³, and R⁴ are hydrogen.

In one embodiment, the cyclopropene compound during the exposure is at a concentration about 1,000 ppb. In another embodiment, the firmness of the persimmons after the exposure is at least 71 N (16 lbfs) after day one or 62 N (14 lbfs) after day seven. In another embodiment, shelf life of the persimmons after the exposure is at least five days, ten days, fifteen days, twenty days, thirty days, forty days, fifty days, or sixty days. In another embodiment, the persimmons are placed in the modified-atmosphere package within two hours, four hours, eight hours, twelve hours, twenty-four hours, or forty-eight hours after harvest.

In another aspect, provided is a method of handling persimmons comprising exposing the persimmons to an atmosphere that contains a cyclopropene compound, wherein the persimmons are placed into a modified-atmosphere package within two hours after exposure to the cyclopropene compound, and the persimmons remain in the modified atmosphere package for at least two hours and further wherein the modified-atmosphere package is constructed so that the transmission rate of oxygen for the entire package is from 200 to 40,000 cubic centimeters per day per kilogram of persimmons and the cyclopropene compound during the exposure is at a concentration between 10 ppb and 5 ppm by volume of the atmosphere.

In one embodiment, the transmission rate of carbon dioxide for the entire package is from 500 to 150,000 cubic centimeters per day per kilogram of persimmons. In another embodiment, the persimmons are placed into a modified-atmosphere package within four hours, eight hours, twelve hours, or twenty hours after exposure to the cyclopropene compound. In another embodiment, the persimmons remain in the modified atmosphere package after the exposure for at least ten hours, twenty hours, forty hours, four days, seven days, or ten days. In another embodiment, the cyclopropene compound is in a formulation with a molecular encapsulating agent. In a further embodiment, the cyclopropene compound comprises 1-methylcyclopropene (1-MCP). In another embodiment, the molecular encapsulating agent comprises alpha-cyclodextrin, beta-cyclodextrin, gamma-cyclodextrin, or combinations thereof. In a further embodiment, the encapsulated agent comprises alpha-cyclodextrin.

In one embodiment, the cyclopropene compound is of the formula: 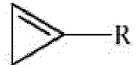 wherein R is a substituted or unsubstituted alkyl, alkenyl, alkynyl, cycloalkyl, cycloalkylalkyl, phenyl, or naphthyl group; wherein the substituents are independently halogen, alkoxy, or substituted or unsubstituted phenoxy.

In a further embodiment, R is C₁₋₈ alkyl. In another embodiment, R is methyl.

In another embodiment, the cyclopropene compound is of the formula: 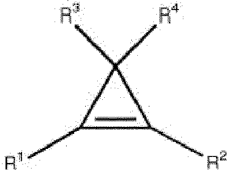 wherein R¹ is a substituted or unsubstituted C₁-C₄ alkyl, C₁-C₄ alkenyl, C₁-C₄ alkynyl, C₁-C₄ cylcoalkyl, cylcoalkylalkyl, phenyl, or napthyl group; and R², R³, and R⁴ are hydrogen.

In one embodiment, the cyclopropene compound during the exposure is at a concentration about 1,000 ppb. In another embodiment, the firmness of the persimmons after the exposure is at least 71 N (16 lbfs) after day one or 62 N (14 lbfs) after day seven. In another embodiment, shelf life of the persimmons after the exposure is at least five days, ten days, fifteen days, twenty days, thirty days, forty days, fifty days, or sixty days.

### BRIEF DESCRIPTION OF THE DRAWINGS

Figure 1 shows representative firmness results up to ten days of the persimmons treated with the method provided (RipeLock), modified atmosphere package alone (MAP), cyclopropene compound alone (SmartFresh), or control (without neither modified atmosphere package nor cyclopropene compound).

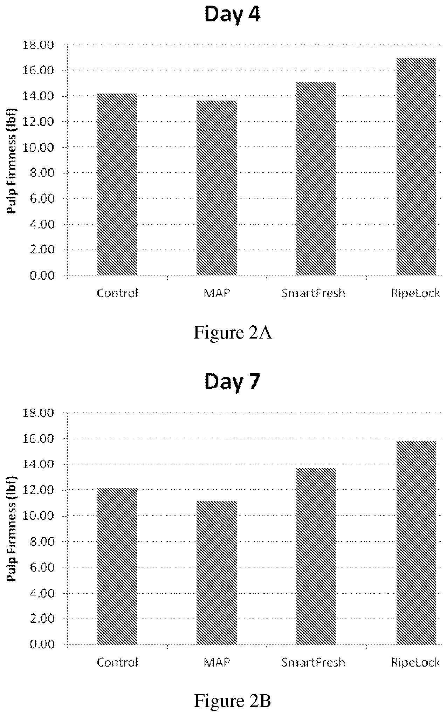

Figure 2A shows representative firmness results of the persimmons four days after treatment according to results of Figure 1. Figure 2B shows representative firmness results of the persimmons seven days after treatment according to results of Figure 1.
Figure 3 shows other representative firmness results up to four days of the persimmons treated with the method provided (RipeLock), modified atmosphere package alone (MAP), cyclopropene compound alone (SmartFresh), or control (without neither modified atmosphere package nor cyclopropene compound).
Figure 4A shows representative firmness results of the persimmons one day after treatment according to results of Figure 3. Figure 2B shows representative firmness results of the persimmons four days after treatment according to results of Figure 3.
Figure 5 shows other representative firmness results up to six days of the persimmons treated with the method provided (Amcor Bag plus SmartFresh = SMF), modified atmosphere package alone (Amcor Bag), cyclopropene compound alone (SmartFresh), or control (without neither modified atmosphere package nor cyclopropene compound).

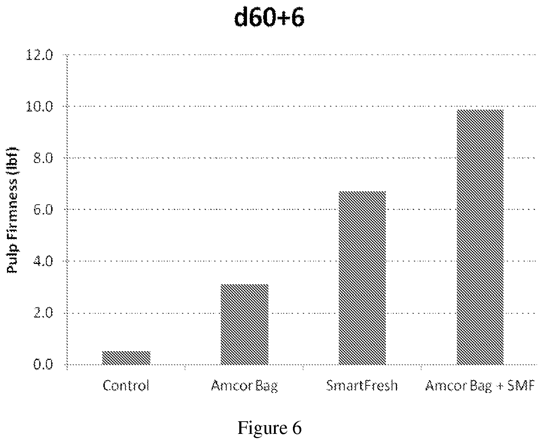

Figure 6 shows representative firmness results of the persimmons six days after treatment according to results of Figure 5.

### DETAILED DESCRIPTION OF THE INVENTION

When a compound is described herein as being present as a gas in an atmosphere at a certain concentration using the unit "ppm," the concentration is given as parts by volume of that compound per million parts by volume of the atmosphere. Similarly, "ppb" denotes parts by volume of that compound per billion parts by volume of the atmosphere.

As used herein "N" denotes Newtons, and "lbf' is pounds-force.

As used herein, a "polymeric film" is an object that is made of polymer; that is much smaller in one dimension (the "thickness") than in the other two dimensions; and that has a relatively uniform thickness. Polymeric film typically has thickness of 1 mm or less.

As used herein, the "pulp firmness" of persimmons is measured using a penetrometer (for example Fruit Test™ FT40 penetrometer, from Wagner Instruments) having a plunger diameter of 8 mm. Performing the test for pulp firmness destroys the persimmon that is tested. When persimmons are said herein to be treated in a certain way (e.g., harvested, shipped, exposed to a cyclopropene compound, etc.) when they have a certain specified pulp firmness, it is meant that, out of a group of persimmons that have been harvested and treated as uniformly as reasonably possible, a sample of a relatively small number of persimmons is removed and tested for pulp firmness. The large group of persimmons is considered to have the pulp firmness that is the average value of the tests performed on the relatively small sample.

The present invention involves the use of one or more cyclopropene compound. As used herein a cyclopropene compound is any compound with the formula 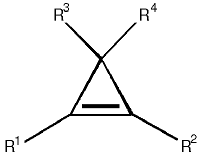 where each R¹, R², R³ and R⁴ is independently selected from the group consisting of H and a chemical group of the formula:

-(L)ₙ-Z

where n is an integer from 0 to 12. Each L is a bivalent radical. Suitable L groups include, for example, radicals containing one or more atoms selected from H, B, C, N, O, P, S, Si, or mixtures thereof. The atoms within an L group may be connected to each other by single bonds, double bonds, triple bonds, or mixtures thereof. Each L group may be linear, branched, cyclic, or a combination thereof. In any one R group (i.e., any one of R¹, R², R³ and R⁴) the total number of heteroatoms (i.e., atoms that are neither H nor C) is from 0 to 6.

Independently, in any one R group the total number of non-hydrogen atoms is 50 or less.

Each Z is a monovalent radical. Each Z is independently selected from the group consisting of hydrogen, halo, cyano, nitro, nitroso, azido, chlorate, bromate, iodate, isocyanato, isocyanido, isothiocyanato, pentafluorothio, and a chemical group G, wherein G is a 3 to 14 membered ring system.

The R¹, R², R³ and R⁴ groups are independently selected from the suitable groups. The R¹, R², R³ and R⁴ groups may be the same as each other, or any number of them may be different from the others. Groups that are suitable for use as one or more of R¹, R², R³ and R⁴ may be connected directly to the cyclopropene ring or may be connected to the cyclopropene ring through an intervening group such as, for example, a heteroatom-containing group.

As used herein, a chemical group of interest is said to be "substituted" if one or more hydrogen atoms of the chemical group of interest is replaced by a substituent. Suitable substituents include, for example, alkyl, alkenyl, acetylamino, alkoxy, alkoxyalkoxy, alkoxycarbonyl, alkoxyimino, carboxy, halo, haloalkoxy, hydroxy, alkylsulfonyl, alkylthio, trialkylsilyl, dialkylamino, and combinations thereof.

Among the suitable R¹, R², R³ and R⁴ groups are, for example, substituted and unsubstituted versions of any one of the following groups: aliphatic, aliphatic-oxy, alkylcarbonyl, alkylphosphonato, alkylphosphato, alkylamino, alkylsulfonyl, alkylcarboxyl, alkylaminosulfonyl, cycloalkylsulfonyl, cycloalkylamino, heterocyclyl (i.e., aromatic or nonaromatic cyclic groups with at least one heteroatom in the ring), aryl, hydrogen, fluoro, chloro, bromo, iodo, cyano, nitro, nitroso, azido, chlorato, bromato, iodato, isocyanato, isocyanido, isothiocyanato, pentafluorothio; acetoxy, carboethoxy, cyanato, nitrato, nitrito, perchlorato, allenyl; butylmercapto, diethylphosphonato, dimethylphenylsilyl, isoquinolyl, mercapto, naphthyl, phenoxy, phenyl, piperidino, pyridyl, quinolyl, triethylsilyl, and trimethylsilyl.

Among the suitable R¹, R², R³ and R⁴ groups are those that contain one or more ionizable substituent groups. Such ionizable groups may be in non-ionized form or in salt form.

Also contemplated are embodiments in which R³ and R⁴ are combined into a single group, which is attached to the number 3 carbon atom of the cyclopropene ring by a double bond. Some of such compounds are described in US Patent Publication 2005/0288189.

In preferred embodiments, one or more cyclopropenes are used in which one or more of R¹, R², R³ and R⁴ is hydrogen. In more preferred embodiments, each of R¹, R², R³ and R⁴ is hydrogen or (C₁-C₈) alkyl. In more preferred embodiments, R¹ is substituted or unsubstituted (C₁-C₈) alkyl, and each of R², R³, and R⁴ is hydrogen. In more preferred embodiments, each of R², R³, and R⁴ is hydrogen, and R¹ is either unsubstituted (C₁-C₄) alkyl or a carboxyl-substituted (C₁-C₈) alkyl. In more preferred embodiments, each of R², R³, and R⁴ is hydrogen, and R¹ is unsubstituted (C₁-C₄) alkyl. In more preferred embodiments, R¹ is methyl and each of R², R³, and R⁴ is hydrogen, and the cyclopropene compound is known herein as 1-methylcycplopropene or "1-MCP."

In preferred embodiments, a cyclopropene compound is used that has boiling point at one atmosphere pressure of 50 °C or lower; or 25 °C or lower; or 15 °C or lower. Independently, in preferred embodiments, a cyclopropene compound is used that has boiling point at one atmosphere pressure of -100 °C or higher; -50 °C or higher; or 25 °C or higher; or 0 °C or higher.

As used herein, "modified-atmosphere packaging" or "MAP" refers to an enclosure that alters the gaseous atmosphere inside the enclosure from normal atmospheric composition when respiring produce is contained inside the enclosure. MAP is an enclosure in the sense that it is a package that may be lifted and transported with the produce contained within it. MAP may or may not allow exchange of gas with the ambient atmosphere outside the MAP. MAP may or may not be permeable to diffusion of any particular gas, independent of its permeability or non-permeability to any other gas.

As used herein, a "monomer" is a compound that has one or more carbon-carbon double bond that is capable of participating in a polymerization reaction. As used herein, an "olefin monomer" is a monomer, the molecules of which contain only atoms of carbon and hydrogen. As used herein, "polar monomer" is a monomer, the molecules of which contain one or more polar group. Polar groups include, for example, hydroxyl, thiol, carbonyl, carbon-sulfur double bond, carboxyl, sulfonic acid, ester linkages, other polar groups, and combinations thereof.

In the methods provided herein, persimmons are exposed to an atmosphere that contains one or more cyclopropene compound. The persimmons are in an enclosure (i.e., and airtight container enclosing a volume of atmosphere), and gaseous cyclopropene compound may be introduced into the enclosure.

In some embodiments, the persimmons are inside a permeable surrounding device, and cyclopropene compound is introduced into the atmosphere outside the permeable surrounding device. In such embodiments, the permeable surrounding device encloses one or more persimmons and allows some contact between the cyclopropene compound and the persimmons, for example by allowing some cyclopropene compound to diffuse through the permeable surrounding device or through holes in the permeable surrounding device or a combination thereof. Such a permeable surrounding device may or may not also qualify as
an MAP as defined herein.

Among embodiments in which gaseous cyclopropene compound is introduced into an enclosure, the introduction may be performed by known methods in the art. For example, the cyclopropene compound may be created in a chemical reaction and vented to the enclosure. For another example, cyclopropene compound may be kept in a container such as a compressed-gas tank and released from that container into the enclosure. For another example, cyclopropene compound may be contained in a powder or pellets or other solid form that contains encapsulated complex of cyclopropene compound in a molecular encapsulating agent. A complex that includes a cyclopropene compound molecule or a portion of a cyclopropene compound molecule encapsulated in a molecule of a molecular encapsulating agent is known herein as a "cyclopropene compound complex" or "cyclopropene molecular complex."

In embodiments in which a molecular encapsulating agent is used, suitable molecular encapsulating agents include, for example, organic and inorganic molecular encapsulating agents. Organic molecular encapsulating agents are provided include, for example, substituted cyclodextrins, unsubstituted cyclodextrins, and crown ethers. Suitable inorganic molecular encapsulating agents include, for example, zeolites. Mixtures of suitable molecular encapsulating agents are also suitable. In one embodiment, the encapsulation agent is selected from the group consisting of alpha cyclodextrin, beta cyclodextrin, gamma cyclodextrin, substituted versions thereof, and combinations thereof. In a further embodiment, the cyclopropene compound is 1-methylcyclopropene, and the encapsulation agent is alpha cyclodextrin. The choice of encapsulation agent will vary depending upon the structure of the cyclodextrin compound or compounds being used. Any cyclodextrin or mixture of cyclodextrins, cyclodextrin polymers, modified cyclodextrins, or mixtures thereof can also be utilized pursuant to the present invention.

In some embodiments, a cyclopropene compound is introduced into an enclosure that contains persimmons by placing cyclopropene molecular complex into the enclosure and then contacting the cyclopropene molecular complex with a release agent. A release agent is a compound that, when it contacts cyclopropene encapsulation complex, promotes the release of the cyclopropene compound into the atmosphere. Among embodiments in which alpha-cyclodextrin is used, water (or a liquid that contains 50% or more water by weight, based on the weight of the liquid) is the exemplary release agent.

In some embodiments, a solid material containing cyclopropene molecular complex is placed into an enclosure that contains persimmons, and water is brought into contact with that solid material. Contact with the water causes release of cyclopropene compound into the atmosphere of the enclosure. For example, the solid material may be in the form of tablets that contain, optionally among other ingredients, encapsulation complex that contains a cyclopropene compound and one or more ingredients that causes effervescence.

For another example, in some embodiments the solid material may be placed into an enclosure that contains persimmons and water vapor in the atmosphere may be effective as a release agent. In some of such embodiments, the solid material that contains cyclopropene encapsulated complex may be in a form that also contains, optionally among other ingredients, a water-absorbing compound such as, for example, a water-absorbing polymer or a deliquescent salt.

In some embodiments, atmosphere containing one or more cyclopropene compound in gaseous form is in contact with persimmons or is in contact with a permeable surrounding device that surrounds one or more persimmons.

MAP may be active or passive. Active MAP is packaging that is attached to some material or apparatus that adds certain gas or gases to the atmosphere inside the MAP and/or removes certain gas or gases from the atmosphere inside the MAP.

Passive MAP (also called commodity generated modified atmosphere packaging) takes advantage of the fact that persimmons respire after harvest. Thus persimmons placed in an enclosure, among other processes, consume oxygen and produce carbon dioxide. The MAP can be designed so that diffusion through the solid exterior surfaces of the MAP and passage of gas through any perforations that may be present in the exterior surface of the MAP maintain optimum levels of oxygen, carbon dioxide, and optionally other gases (such as, for example, water vapor or ethylene or both). In one embodiment, passive MAP is used.
In another embodiment, active MAP is used. In another embodiment, both active and passive MPAs are used. For example, if it is stated herein that an MAP has a certain gas transmission characteristic, both of the following embodiments are contemplated: a passive MAP that has that gas transmission characteristic; and an active MAP that, when it contains persimmons, maintains the same atmosphere within itself that would occur in a passive MAP that had that gas transmission characteristic.

A useful way to characterize the MAP is the gas transmission rate of the MAP itself in relation to the amount of persimmons held in the MAP. Preferably, the rate of transmission of carbon dioxide is, in units of cubic centimeters per day per kilogram of persimmons, 5,000 or higher; more preferably 7,000 or higher; more preferably 10,000 or higher. Preferably, the rate of transmission of carbon dioxide is, in units of cubic centimeters per day per kilogram of persimmons, 150,000 or lower; more preferably 100,000 or lower. The rate of transmission of oxygen is, in units of cubic centimeters per day per kilogram of persimmons as defined in the independent claims, from 200 to 40,000, and preferably, 3,800 or higher; more preferably 7,000 or higher; more preferably 15,000 or higher.

It is useful to characterize the inherent gas transmission characteristics of a polymeric film. By "inherent" it is meant the properties of the film itself, in the absence of any perforations or other alterations. It is useful to characterize the composition of a film by characterizing the gas transmission characteristics of a film that has that composition and that is 30 micrometers thick. It is contemplated that, if a film of interest were made and tested at a thickness that was different from 30 micrometers (e.g., from 20 to 40 micrometers), it would be easy for a person of ordinary skill to accurately calculate the gas transmission characteristics of a film having the same composition and having thickness of 30 micrometers. The gas transmission rate of a film having thickness 30 micrometers is labeled "GT-30" herein.

One useful inherent characteristic of a polymeric film composition is herein called "film beta ratio," which is the quotient that is calculated by dividing the GT-30 for carbon dioxide gas transmission rate by the GT-30 for oxygen gas.

In one embodiment, some or all of the exterior surfaces of the MAP are polymeric. In another embodiment, the polymer is in the form of a polymeric film. Some suitable polymeric films have thickness of 5 micrometer or more; or 10 micrometer or more; or 20 micrometer or more. Independently, some suitable polymeric films have thickness of 200 micrometer or less; or 100 micrometer or less; or 50 micrometer or less.

Some suitable polymer compositions include, for example, polyolefins, polyvinyls, polystyrenes, polydienes, polysiloxanes, polyamides, vinylidene chloride polymers, vinyl chloride polymers, copolymers thereof, blends thereof, and laminations thereof. Suitable polyolefins include, for example, polyethylenes, polypropylenes, copolymers thereof, blends thereof, and laminations thereof. Suitable polyethylenes include, for example, low density polyethylene, ultralow density polyethylene, linear low density polyethylene, metallocene-catalyzed polyethylene, copolymers of ethylene with polar monomers, medium density polyethylene, high density polyethylene, copolymers thereof and blends thereof. Suitable polypropylenes include, for example, polypropylene and oriented polypropylene. In some embodiments, low density polyethylene is used. In one embodiment, copolymer of styrene and butadiene is used. In another embodiment, polyamides, polyolefins, and blends thereof are used.

Among polyolefins, one example is polyethylene; and another example is metallocene-catalyzed polyethylene. Other examples include polymer compositions comprising one or more polyolefin and/or one or more copolymer of an olefin monomer with a polar monomer. The phrase "copolymer" refers to a product of copolymerizing two or more different monomers. Suitable copolymers of an olefin monomer with a polar monomer include, for example, such polymers available from DuPont called Elvax™ resins. One embodiment includes copolymers of ethylene with one or more polar monomer. Suitable polar monomers include, for example, vinyl acetate, methyl acrylate, ethyl acrylate, butyl acrylate, acrylic acid, methacrylic acid, and mixtures thereof. For one example polar monomers contain one or more ester linkage; for another example is vinyl acetate. Among copolymers of ethylene with one or more polar monomer, the amount of polar monomer may be, by weight based on the weight of the copolymer, 0.5% or more; for example 1% or more; or 1.5% or more. Among copolymers of ethylene with one or more polar monomer, the amount of polar monomer may be, by weight based on the weight of the copolymer, 25% or less; for example 20% or less; or 15% or less.

Suitable polyolefins include blends of a polyolefin homopolymer with a copolymer of an olefin monomer with a polar monomer. Among such blends, the weight ratio of homopolymer to copolymer may be 0.5:1 or higher; for example 0.8:1 or higher; or 1:1 or higher. Among such blends, the weight ratio of homopolymer to copolymer may be 3:1 or lower; for example 2:1 or lower; or 1.25:1 or lower.

Suitable polyamides include nylon 6, nylon 6,6, and copolymers thereof; for example copolymers of nylon 6 with nylon 6,6. Among copolymers of nylon 6 with nylon 6,6 (often called nylon 666), examples include copolymers in which the weight ratio of polymerized units of nylon 6 to polymerized units of nylon 6,6 may be 0.05:1 or higher; 0.11:1 or higher; or 0.25:1 or higher. Among copolymers of nylon 6 with nylon 6,6, examples include copolymers in which the weight ratio of polymerized units of nylon 6 to polymerized units of nylon 6,6 may be 9:1 or lower; 3:1 or lower; or 1.5:1 or lower.

Suitable blends of polyamide with polyolefin include blends in which the weight ratio of polyamide to polyolefin may be 0.05:1 or higher; 0.11:1 or higher; 0.25:1 or higher; or 0.5:1 or higher. Suitable blends of polyamide with polyolefin include blends in which the weight ratio of polyamide to polyolefin may be 9:1 or lower; 5: 1 or lower; or 3: 1 or lower.

When it is stated herein that a container comprises polymeric film, it is meant that some or all of the surface area of the container consists of polymeric film, and the film is arranged so that molecules that are capable of diffusing through the polymeric film will diffuse between the inside of the container and the outside of the container in both directions. Such a container may be constructed so that one, two, or more separate portions of the surface area of the container consist of polymeric film, and the polymeric film portions may be the same composition as each other or may be different from each other. It is contemplated that such containers will be constructed so that the portion of the container surface that is not polymeric film will effectively block diffusion of gas molecules (i.e., the amount of gas molecules that diffuse through will be of negligible importance).

Suitable polyolefin films include film compositions for which the GT-30 for carbon dioxide at 23 °C, in units of cm³/(m²-day), may be 800 or higher; 4,000 or higher; 5,000 or higher; 10,000 or higher; or 20,000 or higher. Example include films with GT-30 for carbon dioxide at 23 °C, in units of cm³/(m²-day), of 150,000 or lower; 80,000 or lower; or 60,000 or lower. Other examples include films with GT-30 for oxygen at 23 °C, in units of cm³/(m²-day), of 200 or higher; 1,000 or higher; 3,000 or higher; or 6,000 or higher. Other examples include films with GT-30 for oxygen at 23 °C, in units of cm³/(m²-day), of 150,000 or lower; 80,000 or lower; 40,000 or lower; 20,000 or lower; or 15,000 or lower. Other examples include films with GT-30 for water vapor at 37.8 °C, in units of g/(m²-day), of 5 or higher; or 10 or higher. Other examples include films with GT-30 for water vapor at 37.8 °C, in units of g/(m²-day), of 330 or lower; 150 or lower; 100 or lower; 55 or lower; 45 or lower; or 35 or lower. In one embodiment, film has film beta ratio of 1 or higher; or 2 or higher. In another embodiment, film has beta ratio of 15 or lower; or 10 or lower.

Polyamide films, as used herein, includes films containing polyamide and films containing a blend of polyamide with one or more other polymer. Suitable polyamide films include films with GT-30 for water vapor at 37.8 °C, in units of g/(m²-day), of 10 or higher; or 20 or higher. Examples include films with GT-30 for water vapor at 37.8 °C, in units of g/(m²-day), of 1,000 or lower; 800 or lower; 500 or lower; 350 or lower; or 200 or lower.

It is contemplated that the GT-30 for oxygen and the GT-30 for carbon dioxide are both very low for polyamide films. It is contemplated that when MAP is used that is made of a film that is made of polyamide or a blend of polyamide with other polymer(s), the film will be perforated in a way that is chosen to provide the desired gas transmission characteristics of the MAP itself.

In one embodiment, polymeric film is used that has perforations. In a further embodiment, the holes have mean diameter of 5 micrometers to 500 micrometers. In another embodiment involving perforations, the holes may have mean diameter of 10 micrometers or more; 20 micrometers or more; 50 micrometers or more; or 100 micrometers or more. Independently, in another embodiment involving perforations, the holes may have mean diameter 300 micrometers or less; or 200 micrometers or less. If a hole is not circular, the diameter of the hole is considered herein to be 2 times the square root of the quotient of the area of the hole divided by pi.

In one embodiment, the MAP comprises polymeric film, and the percent of the surface area of the MAP that consists of the polymeric film may be 10% to 100%; 50% to 100%; 75% to 100%; or 90% to 100%. An MAP in which 90% to 100% of the surface area consists of polymeric film is known herein as a "bag." Example include MAP that comprise polymeric film and in which all portions of the surface of the MAP that are not polymeric film effectively block diffusion of gas molecules. In embodiments in which the MAP comprises polymeric film and the remainder (if any) of the surface of the MAP effectively blocks diffusion of gas molecules, the MAP is considered to be passive MAP.

Holes in polymeric film may be made by methods known in the art. Suitable methods include, for example, laser perforation, hot needles, flame, low-energy electrical discharge, and high-energy electrical discharge. In one embodiment, such method is laser perforation.

Another useful way to characterize an MAP is the "MAP beta ratio," which is defined herein as the quotient that results from dividing the rate of transmission of carbon dioxide of the MAP by the rate of transmission of oxygen of the MAP itself. In one embodiment, the MAP beta ratio may be 0.3 or higher; or 0.5 or higher. In another embodiment, the MAP beta ratio may be 5 or lower; 3 or lower; or 2 or lower. In another embodiment, when the MAP is made entirely of polyolefin film, the MAP beta ratio is 1.0 to 1.6. In another embodiment, when the MAP is made entirely of polyamide film, the MAP beta ratio is 0.5 to 0.999. In another embodiment, when the MAP is made of a film that contains a blend of polyamide and polyolefin, the MAP beta ratio is 0.6 to 1.2.

In one embodiment, persimmons are harvested when they are mature but not yet ripe. In another embodiment, the persimmons are harvested when the dry matter content, by weight based on the weight of the persimmon, is 17% or higher.

In one embodiment, persimmons are harvested and immediately (for example within two hours) placed into MAP before exposure to the cyclopropene compound. In another embodiment, the time from harvest to placement into MAP may be 30 days or less; 14 days or less; 7 days or less; or 2 days or less. In another embodiment, harvested persimmons are placed into MAP after exposure to the cyclopropene compound and prior to shipment, and the harvested persimmons remain in the MAP during shipment.

In one embodiment, persimmons are harvested and, prior to being placed into MAP, the persimmons are placed in pre-shipment storage. Such pre-shipment storage may be below room temperature, for example 7 °C or lower. After such storage, the persimmons may be placed in to MAP and then shipped to their destination.

In another embodiment, persimmons are shipped to a destination that is near the intended point of consumption or else are harvested near the intended point of consumption and/or sale. As used herein, "near the intended point of consumption and/or sale" means a location from which it is capable to transport the persimmons to the point of consumption in 3 days or fewer by truck or other surface transportation.

In one embodiment where persimmons are placed into a modified-atmosphere package after exposure to the cyclopropene compound (for example, persimmons are exposed to an atmosphere that contains a cyclopropene compound while the persimmons are not in an MAP), persimmons are placed into an MAP after the conclusion of the exposure to the atmosphere that contains a cyclopropene compound, and the persimmons then remain in the MAP for at least two hours.

In another embodiment where persimmons are placed into a modified-atmosphere package after exposure to the cyclopropene compound, the persimmons are kept at temperature of 10 °C or above from the conclusion of the exposure to the atmosphere that contains a cyclopropene compound until the persimmons are placed into the MAP. In a further embodiment, the time period from the conclusion of the exposure to the atmosphere that contains a cyclopropene compound until the persimmons are placed into the MAP may be eight hours or less; four hours or less; two hours or less; or 1 hour or less.

In another embodiment where persimmons are placed into a modified-atmosphere package after exposure to the cyclopropene compound, the persimmons are kept at temperature below 10 °C from the conclusion of the exposure to the atmosphere that contains a cyclopropene compound until the persimmons are placed into the MAP. In a further embodiment, the temperature at which persimmons are kept from the conclusion of the exposure to the atmosphere that contains a cyclopropene compound until the persimmons are placed into the MAP may be 7 °C or lower. In another further embodiment, the time period from the conclusion of the exposure to the atmosphere that contains a cyclopropene compound until the persimmons are placed into the MAP may be between ten minutes to two months.

In one embodiment where the persimmons are in a modified-atmosphere package during exposure to the cyclopropene compound (for example, persimmons are exposed to an atmosphere that contains a cyclopropene compound while the persimmons are in a MAP), there is an improvement in the pulp firmness of the persimmons that can be seen even immediately after the conclusion of the exposure of the persimmons to the cyclopropene compound.

In another embodiment where the persimmons are in a modified-atmosphere package during exposure to the cyclopropene compound, persimmons are in an MAP for a time period of duration of 1 day or more, where that time period is after harvest and before exposure to atmosphere containing a cyclopropene compound (herein called a "pre-X" time period). In a further embodiment, composition of the MAP comprises polyamide.

In some embodiments, the persimmons reside in an MAP for a storage time period that begins within 1 hour of the conclusion of the exposure to atmosphere containing cyclopropene compound (herein called a "post-X" time period). For example, post-X storage time period may begin within thirty minutes of the conclusion of the exposure to cyclopropene compound; within fifteen minutes; within eight minutes; or within one minute.

In another embodiment where the persimmons are in a modified-atmosphere package during exposure to the cyclopropene compound, the persimmons are in an MAP during exposure to atmosphere containing cyclopropene compound; if the persimmons remain in the MAP thereafter without being removed from the MAP, the post-X storage time period is considered to begin immediately upon the conclusion of the exposure to atmosphere containing cyclopropene compound. For example, the post-X storage time period may last for one day or longer; or 2 days or longer.

By "conclusion of exposing the persimmons to a cyclopropene compound," it is meant herein a time after which persimmons have been exposed to a cyclopropene compound as described herein and at which the concentration of cyclopropene compound in the atmosphere around the persimmons (or the atmosphere around the permeable surrounding device, if the persimmons were in a permeable surrounding device during exposure to cyclopropene compound) falls below 0.5 ppb.

In some embodiments, suitable MAP is chosen or designed so that, when persimmons are placed into the MAP and the MAP, with the persimmons inside, is then exposed to atmosphere containing cyclopropene compound, and then stored for 10 days at 16.7 °C, a certain pre-determined atmosphere will be present in the MAP. In one embodiment with the pre-determined atmosphere, the amount of carbon dioxide, by volume based on the volume of the atmosphere inside the MAP, may be 1% or more; or 5% or more. In another embodiment with the pre-determined atmosphere, the amount of carbon dioxide, by volume based on the volume of the atmosphere inside the MAP, may be 20% or less; or 15% or less. In another embodiment with the pre-determined atmosphere, the amount of oxygen, by volume based on the volume of the atmosphere inside the MAP, may be 3% or more; or 5% or more. In another embodiment with the pre-determined atmosphere, the amount of oxygen, by volume based on the volume of the atmosphere inside the MAP, may be 20% or less; or 15% or less.

The Oxygen Transmission Rate or OTR for a modified atmosphere package can be calculated from the work presented in literature or measured directly. For a microperforated polymer bag the OTR due to the permeability of the film at any given time can be theoretically calculated using Fick's law of diffusion where the permeability coefficient for the polymer film can be measured using a procedure as called out in ASTM method D3985 for O₂. For this same microperforated bag the OTR due to the microperforations can be calculated using a modified Fick's law of diffusion. The OTR at any given time is dependent on the O₂ concentration driving force at that point of time. The OTR of the system can be measured by measuring the O₂ partial pressure versus time and then plotting the natural log of the concentration gradient versus time. This is a convenient method in cases where there are not well validated models for the OTR such as microporous systems or unique combinations of approaches such as microporous patches combined with films or microperforated films.

### EXAMPLES

### Example 1

### Persimmons Placed in MAP Bags and Treated with MCP Before Storage and Ethanol After Storage

Persimmons are harvested in Mogi das Cruzes - SP - Brazil and packed in RPC (Recycle Plastic Container) and shipped to Piracicaba - SP. At the same day of harvest part of the persimmons are packed in MAP bags.
Location: Brazil
Variety: Giombo (astringent and need to be treated with ethanol to be ready to eat) Storage at 12°C for 15 days
MAP Bag: a Nylon bag with dimensions of 27" (68.6 cm) width by 28"(71.1 cm) length made from Kenylon 6250 Polyamide Film available from FM Packaging.
MCP application before the storage
Ethanol Application after the storage

For the MAP bag used, the base film has 25 microns thickness without laser holes. The oxygen (O₂) permeation of the MAP bag used is about 28 cc/ m²-day and the CO₂ permeation is about 227 cc /m2-day. The bags are laser drilled in the length direction with 105 micron holes at two locations 9" (22.9 cm) from each side of the bag. The hole spacing is 9.06 mm. The total number of laser holes in the 20" (50,8 cm) (8" (20.3 cm) for tie off) length direction of the bag are about 228 holes. At an average hole diameter of 105 micron (pi x r² = 8630 micron²), the 228 holes can provide an open area of ∼ 2.0 mm². The OTR of the bag is calculated to be 32,250 cm³/day.

The Test Protocol is as follows. 4 MAP bags are packed. Each bag holds approximately 16 kg (36 lb) of persimmons. One such bag is packed in each RPC. Total weight of persimmons in MAP bags is approximately 64 kg. Approximately 64 kg of persimmons are placed into RPC identical to those used for the MAP bags.

The MAP-packaged persimmons are packaged as follows: 80 fruits, approximately 16 kg are carefully placed into microperforated bags, and the bags are sealed by twisting the open side of the bag, folding down the twisted end, and placing a rubber band around the twisted and folded end of the bag.

The appropriate weight of persimmons is placed in each bag after harvest and shipment. Bags are placed in RPC carrying devices. Persimmons are moved to a Cold Room at 12 °C next.

On the same day the persimmons are bagged, each treatment set is marked, placed in a hermetical chamber at the Cold Room. All chambers are of equal size and packed the same way. Treatment lasts for 12 hours. In the chambers for the "MCP" treatment groups, at the beginning of the treatment period, SmartTabs™ tablets are placed in the chamber. The amount of SmartTab™ tablets is chosen to achieve the indicated concentration of 1-methylcyclopropene in the atmosphere of the chamber.

After packed in MAP bags the persimmons are randomly divided into treatment sets as follows:

**Table 1. Persimmons treatment in this example**

| | | MCP Concentration | |
|---|---|---|---|
| Number of RPCs | Bag Type | 0 ppb | 1000 ppb |
| 4RPCs | No MAP | 2RPCs | 2RPCs |
| 4RPCs | MAP Bag | 2RPCs | 2RPCs |

The treatment group with MAP bags and with non-zero MCP are examples of the present invention. All other treatment groups are comparative.

Persimmons used in this trial are an astringent variety. To remove the astringency the fruits were treated with ethanol after the 15 days at cold storage.

After removed the bags for the MAP bag groups, all the fruits are placed in a hermetical chamber and treated with ethanol (3.5mL/kg of fruit) for 12 hours.

After the treatment in the chambers, the RPCs are moved into racks at room temperature for storage and observation.

Firmness evaluation is as follows. Day "zero" was the day the persimmons are harvested and Day "one" is the day the persimmons are removed from the ethanol treatment.

**Table 2-1. Firmness results, N, (lbf) and shelf life of persimmons**

| | Day 0 | Day 1 | Day4 | Day 7 | Day 10 |
|---|---|---|---|---|---|
| Control | 93.37 (20.99) | 72.01 (16.19) | 63.16 (14.20) | 54.05 (12.15) | 43.99 (9.89) |
| SmartFresh | 93.37 (20.99) | 79.49 (17.87) | 67.12 (15.09) | 60.94 (13.70) | 56.14 (12.62) |
| MAP | 93.37 (20.99) | 63.57 (14.29) | 60.76 (13.66) | 49.46 (11.12) | 52.71 (11.85) |
| Ripe Lock | 93.37 (20.99) | 80.78 (18.16) | 75.35 (16.94) | 70.46 (15.84) | 63.30 (14.23) |

For the Pulp Firmness evaluation, the persimmons have the skin removed with a peeler and the pulp firmness is measured with a Firmness Texture Analyzer (FTA) with a probe of 8 mm.

**Table 2-2. Pulp Firmness, N, (lbf) of persimmons tested**

| | | | Day | |
|---|---|---|---|---|
| Bag | ppb of MCP | 0 | 1 | 4 |
| No Bag | 0 | 93.37 (20.99) | 73.40 (16.50) | 67.30 (15.13) |
| No Bag | 1000 | 93.37 (20.99) | 74.06 (16.650) | 65.57 (14.74) |
| MAP | 0 | 93.37 (20.99) | 69.92 (15.72) | 63.43 (14.26) |
| MAP | 1000 | 93.37 (20.99) | 82.83 (18.62) | 80.87 (18.18) |

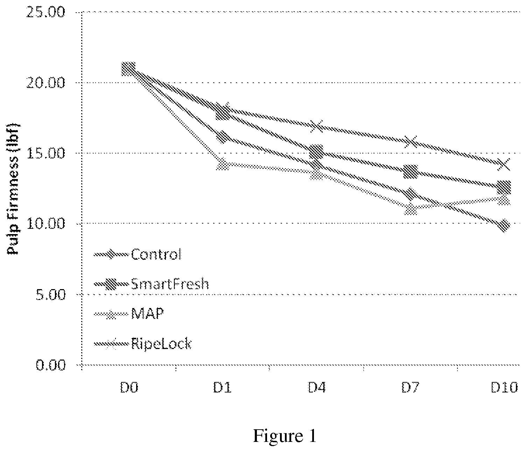

As shown in Figure 1, firmness results of the treatment group with MAP bags in combination of 1-MCP treatment are labeled as "RipeLock." Persimmons treated with the MAP bags alone (MAP), 1-MCP alone with opened MAP bags (SmartFresh), and control (without neither modified atmosphere package nor cyclopropene compound) are also shown for comparison.

The results above show that the persimmons treated by the method of the present invention have pulp firmness retention for a longer period of time than any other treatment.

Overall, our observations suggest that 1-MCP alone provides 0.67 N (0.15 lbf) of firmness to the persimmons after 1 day at room temperature. MAP alone does not provide additional firmness to the persimmons after 4 days at room temperature. However, the combined treatment is synergistic in that the firmness of the persimmons is maintained 13.57 N (3.05 lbf) higher than the untreated fruits.

**Table 3. Firmness difference,Δ in N, (Δ in lbf) as compared to the control group**

| | Day 4 | Δ | Day 7 | Δ |
|---|---|---|---|---|
| Control | 63.16 (14.20) | 0.00 (0.00) | 54.05 (12.15) | 0.00 (0.00) |
| MAP | 60.76 (13.66) | -2.40 (-0.54) | 49.46 (11.12) | -4.54 (-1.02) |
| SmartFresh | 67.12 (15.09) | 3.96 (0.89) | 60.94 (13.70) | 6.89 (1.55) |
| Ripe Lock | 75.35 (16.94) | 12.19 (2.74) | 70.46 (15.84) | 16.41 (3.69) |

### Example 2

### Persimmons Placed in MAP Bags and Treated with 1-MCP and Ethanol Before Storage

This Example uses a similar test to Example 1 but with the ethanol application before the storage, at the same time as 1-MCP application.

Persimmons are harvested in Mogi das Cruzes - SP - Brazil and packed in RPC (Recycle Plastic Container) and shipped to Piracicaba - SP. At the same day of harvest part of the persimmons are packed in MAP bags.

The Test Protocol is as follows. 4 MAP bags are packed. Each bag holds approximately 16 kg (36 lb) of persimmons. One such bag is packed in each RPC. Total weight of persimmons in MAP bags is approximately 64 kg. Approximately 64 kg of persimmons are placed into RPC identical to those used for the MAP bags.

The MAP-packaged persimmons are packaged as follows: 80 fruits, approximately 16 kg are carefully placed into microperforated bags, and the bags are sealed by twisting the open side of the bag, folding down the twisted end, and placing a rubber band around the twisted and folded end of the bag.

The appropriate weight of persimmons is placed in each bag after harvest and shipment. Bags are placed in RPC carrying devices. Persimmons are moved to a Cold Room at 12 °C next.

On the same day the persimmons are bagged, each treatment set is marked, placed in a hermetical chamber at the Cold Room. All chambers are of equal size and packed the same way. Treatment lasts for 12 hours. In the chambers for the "MCP" treatment groups, at the beginning of the treatment period, SmartTabs ™ tablets are placed in the chamber. The amount of SmartTab™ tablets is chosen to achieve the indicated concentration of 1-methylcyclopropene in the atmosphere of the chamber. At the same time the persimmons are exposed to ethanol with the purpose of removing the astringency (3.5 mL/kg of fruit).

After packed in MAP bags the persimmons are randomly divided into treatment sets as follows:

**Table 4. Persimmons treatment in this example**

| | | MCP Concentration | |
|---|---|---|---|
| Number of RPCs | Bag Type | 0ppb | 1000ppb |
| 4RPCs | No MAP | 2RPCs | 2RPCs |
| 4RPCs | MAP Bag | 2RPCs | 2RPCs |

The treatment group with MAP bags and with non-zero MCP are examples of the present invention. All other treatment groups are comparative.

After the storage at Cold Room, the bags are removed and the RPCs are moved into racks at room temperature for storage and observation.

Evaluation firmness is as follows. Day "zero" is the day the persimmons are harvested and Day "one" is the day the persimmons are removed from the cold storage.

**Table 5-1. Firmness results, N, (lbf) of persimmons**

| | Day 0 | Day 1 | Day 4 |
|---|---|---|---|
| Control | 93.37 (20.99) | 73.40 (16.50) | 67.30 (15.13) |
| SmartFresh | 93.37 (20.99) | 74.06 (16.65) | 65.57 (14.74) |
| MAP | 93.37 (20.99) | 69.93 (15.72) | 63.43 (14.26) |
| RipeLock | 90.48 (20.34) | 82.83 (18.62) | 80.07 (18.18) |

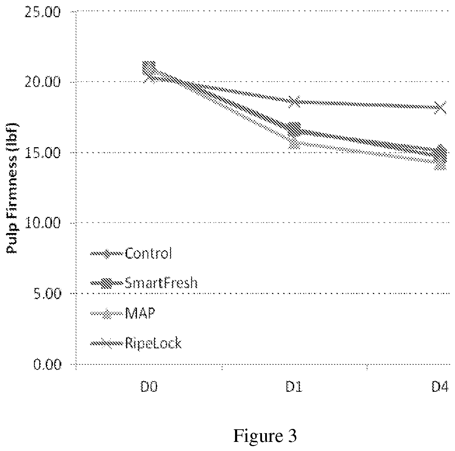

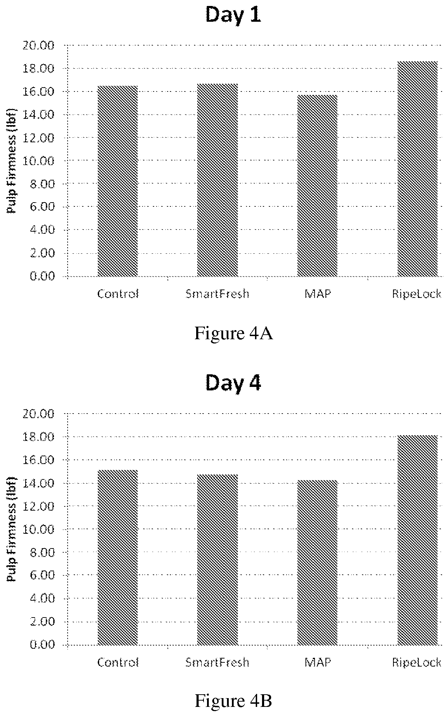

As shown in Figure 3, firmness results of the treatment group with MAP bags in combination of 1-MCP treatment are labeled as "RipeLock." Persimmons treated with the MAP bags alone (MAP), 1-MCP alone with opened MAP bags (SmartFresh), and control (without neither modified atmosphere package nor cyclopropene compound) are also shown for comparison. The detailed data are also shown in Figures 4A and 4B as well as set forth in Table 3. Table 4 shows firmness difference (A) compared to the control. The effect of the combination of 1-MCP (SmartFresh) and MAP appears to be synergistic to extend firmness/shelf life of persimmons.

For the Pulp Firmness evaluation, the persimmons have the skin removed with a peeler and the pulp fimmess is measured with a Firmness Texture Analyzer (FTA) with a probe of 8 mm.

**Table 5-2. Pulp Firmness , N, (lbf) of persimmons tested**

| | | Day | | | | |
|---|---|---|---|---|---|---|
| Bag | ppb of MCP | 0 | 1 | 4 | 7 | 10 |
| No Bag | 0 | 93.37 (20.99) | 72.02 (16.19) | 63.16 (14.20) | 54.05 (12.15) | 43.99 (9.89) |
| No Bag | 1000 | 93.37 (20.99) | 79.49 (17.87) | 67.12 (15.09) | 60.94 (13.70) | 56.14 (12.62) |
| MAP | 0 | 93.37 (20.99) | 63.57 (14.29) | 60.76 (13.66) | 49.46 (11.12) | 52.71 (11.85) |
| MAP | 1000 | 93.37 (20.99) | 80.78 (18.16) | 75.35 (16.94) | 70.46 (15.84) | 63.30 (14.23) |

The results above show that the persimmons treated by the method of the present invention have pulp firmness retention for a longer period of time than any other treatment.

Overall, our observations suggest that 1-MCP alone provides 6.89 N (1.551bf) of firmness to the persimmons after 7 day at room temperature. MAP alone does not provide additional firmness to the persimmons after 7 days at room temperature. However, the combined treatment is synergistic in that the firmness of the persimmons is maintained 16.41N (3.69 lbf) higher than the untreated fruits.

**Table 6. Firmness difference (Δ in N) ((Δ in lbf)) as compared to the control group**

| | Day 1 | Δ | Day 4 | Δ |
|---|---|---|---|---|
| Control | 73.40 (16.50) | 0.00 | 67.30 (15.13) | 0.00 |
| SmartFresh | 74.06 (16.65) | 0.66 (0.15) | 65.57 (14.74) | -1.73 (-0.39) |
| MAP | 69.93 (15.72) | -3.47 (-0.78) | 63.43 (14.26) | -3.87 (-0.87) |
| RipeLock | 82.83 (18.62) | 9.43 (2.12) | 80.87 (18.18) | 13.57 (3.05) |

### Example 3

### Persimmons Placed in MAP Bags and Treated with MCP Before Storage

Persimmons are harvested in Madera - CA - USA and packed in cardboard boxes and shipped to Davis - CA. At the same day of harvest part of the persimmons are packed in MAP bags.
Location: USA
Variety: Fuyu (non astringent, doesn't need ethanol application, ready to eat after harvest)
Storage at 0 °C for 60 days
MCP application before the storage
MAP Bag: Amcor bag type 30EF90.

The Amcor bag type 30EF90 has dimensions of 39.5" (100.3 cm) wide and 35" (88.9 cm) long. The bag is not perforated and has 25 microns thickness with an oxygen (O₂) permeability of 6750 cc/[m² day]. The OTR of the bag is calculated to be 7560 cm³/day.

The Test Protocol is as follows. 4 MAP bags are packed. Each bag holds approximately 10 kg (22.5 lb) of persimmons. One such bag is packed in each RPC (Recycle Plastic Container). Total weight of persimmons in MAP bags is approximately 40 kg. Approximately 40 kg of persimmons are placed into RPC identical to those used for the MAP bags.

The MAP-packaged persimmons are packaged as follows: 80 fruits, approximately 10 kg were carefully placed into microperforated bags, and the bags are sealed by twisting the open side of the bag, folding down the twisted end, and placing a rubber band around the twisted and folded end of the bag.

The appropriate weight of persimmons is placed in each bag after harvest and shipment. Bags are placed in RPC carrying devices. Persimmons then are moved to a Cold Room at 0 °C.

On the same day the persimmons are bagged, each treatment set is marked, placed in a hermetical chamber at the Cold Room. All chambers are of equal size and packed the same way. Treatment lasts for 12 hours. In the chambers for the "MCP" treatment groups, at the beginning of the treatment period, SmartTabs™ tablets are placed in the chamber. The amount of SmartTab™ tablets is chosen to achieve the indicated concentration of 1-methylcyclopropene in the atmosphere of the chamber.

The treatment group with MAP bags and with non-zero MCP are examples of the present invention. All other treatment groups are comparative. After packed in MAP bags the persimmons are randomly divided into treatment sets as follows.

**Table 7. Persimmons treatment in this example**

| | | MCP Concentration | |
|---|---|---|---|
| Number of RPCs | Bag Type | 0ppb | 500ppb |
| 4RPCs | No MAP | 2RPCs | 2RPCs |
| 4RPCs | MAP Bag | 2RPCs | 2RPCs |

After 60 days of storage at Cold Room, the bags are removed and the RPCs are moved into racks at room temperature for storage and observation.

Evaluation firmness is as follows. Day "zero" is the day the persimmons are removed from the cold storage.

**Table 8-1. Firmness results, N, (lbf) of persimmons**

| | d60+0 day | d60+3 day | d60+6 day |
|---|---|---|---|
| Control | 40.48 (9.1) | 6.23 (1.4) | 2.22 (0.5) |
| SmartFresh | 35.14 (7.9) | 40.48 (9.1) | 29.80 (6.7) |
| Amcor Bag | 60.50 (13.6) | 24.02 (5.4) | 13.79 (3.1) |
| Amcor Bag+ SMF | 49.37 (11.1) | 44.48 (10.0) | 44.04 (9.9) |

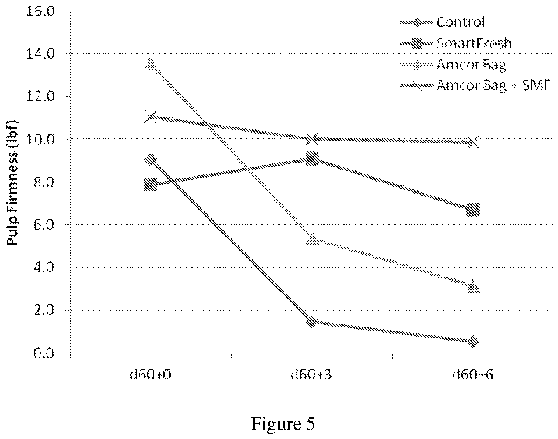

As shown in Figure 5, firmness results of the treatment group with MAP bags in combination of 1-MCP treatment are labeled as "Amcor Bag+ SMF." Persimmons treated with the MAP bags alone (Amcor), 1-MCP alone with opened MAP bags (SmartFresh), and control (without neither modified atmosphere package nor cyclopropene compound) are also shown for comparison.

**Table 8-2. Pulp Firmness, N, (lbf) of persimmons tested**

| | | Days | | |
|---|---|---|---|---|
| Bag | ppb of MCP | 0 | 3 | 6 |
| No Bag | 0 | 40.48 (9.1) | 6.23 (1.4) | 2.22 (0.5) |
| No Bag | 500 | 35.14 (7.9) | 40.48 (9.1) | 29.80 (6.7) |
| MAP | 0 | 60.50 (13.6) | 24.02 (5.4) | 13.79 (3.1) |
| MAP | 500 | 49.38 (11.1) | 44.48 (10.0) | 44.04 (9.9) |

For the Pulp Firmness evaluation, the persimmons have the skin removed with a peeler and the pulp firmness is measured with a Firmness Texture Analyzer (FTA) with a probe of 8 mm.

The results above show that the persimmons treated by the method of the present invention have pulp firmness retention for a longer period of time than any other treatment.

Overall, our observations suggest that 1-MCP alone provides 27.58 N (6.2 lbf) of firmness to the persimmons. MAP alone provides 11.57 N (2.6 lbf) of firmness to the persimmons. However, the combined treatment is synergistic in that the firmness of the persimmons is maintained 41.81 (9.4 lbf) higher than the untreated fruits.

**Table 9. Firmness difference, Δ in N, (Δ in lbf) as compared to the control group**

| | d60+6 day | Δ |
|---|---|---|
| Control | 2.22 (0.5) | 0.0 |
| Amcor Bag | 13.79 (3.1) | 11.57 (2.6) |
| SmartFresh | 29.80 (6.7) | 27.58 (6.2) |
| Amcor Bag+ SMF | 44.04 (9.9) | 41.37 (9.3) |

### Example 4

### Persimmons Persimmons Placed in MAP Bags and Treated with MCP Before Storage and C0₂ Astringency Removal After Storage

Persimmons are harvested in Valencia - Spain and in the packing house part of the fruits are packed in plastic boxes and the other part is packed in MAP bags.
Location: Spain
Variety: Rojo Brillante (astringent, need CO2 application, ready to eat
after astringency removal process)
Storage at 0°C for 72 days
MCP application before the storage
MAP Bag: PE/EVA OP and Nylon bag with dimensions of 27" (68.6 cm) width by 28"(71.1 cm) length made from Kenylon 6250 Polyamide Film available from FM Packaging

The Test Protocol is as follows.
a. PE/EVA 0P Bags: 3kg (6.61b) of fruits per bag, 5 bags per box and 6 RPC boxes
b. PE/EVA 8P Bags: 1kg (2.21b) of fruits per bag, 15 bags per box and 6 RPC boxes
c. Nylon 0.2 and 0.35: 10kg (22.5lb) of fruits per bag, 2 bag per box and 6 RPC boxes
d. No Bag: 20 kg of fruits per box and 6 RPC boxes

The MAP-packaged persimmons are packaged as follows: fruits are carefully placed into microperforated bags, and the bags are sealed by twisting the open side of the bag, folding down the twisted end, and placing a rubber band around the twisted and folded end of the bag.

The appropriate weight of persimmons is placed in each bag after harvest and shipment. Bags are placed in RPC carrying devices. Persimmons then are moved to a Cold Room at 1 °C.

On the same day the persimmons are bagged, each treatment set is marked, placed in a hermetical chamber at the Cold Room. All chambers are of equal size and packed the same way. Treatment lasts for 18 hours. In the chambers for the "MCP" treatment groups, at the beginning of the treatment period, SmartTabs™ tablets are placed in the chamber. The amount of SmartTab™ tablets is chosen to achieve the indicated concentration of 1-methylcyclopropene in the atmosphere of the chamber.

After packed in MAP bags the persimmons are randomly divided into treatment sets as follows:

| Table 10. Persimmons treatment in Example 4 | | | |
|---|---|---|---|
| | | MCP Concentration | |
| Number of RPCs | Bag Type | 0ppb | 600ppb |
| 6 RPCs | No MAP | 3 RPCs | 3 RPCs |
| 6 RPCs | PE/EVA 0P Bag | 3 RPCs | 3 RPCs |
| 6 RPCs | PE/EVA 8P Bag | 3 RPCs | 3 RPCs |
| 6 RPCs | Nylon 0.2 Bag | 3 RPCs | 3 RPCs |
| 6 RPCs | Nylon 0.35 Bag | 3 RPCs | 3 RPCs |

The treatment group with MAP bags and with non-zero MCP are examples of the present invention. All other treatment groups are comparative.

After 59 days of storage at Cold Room, the fruits are exposed to CO₂ for the astringency removal process.

After the carbon dioxide treatment, the bags are removed and the RPCs are moved into racks at room temperature for storage and observation for 7 days.

Firmness evaluation is performed as follows. Δ is the difference between the firmness for the treatment and the firmness for the No Bag treatment.

| Table 11. Firmness results (kg) of persimmons | | |
|---|---|---|
| | Firmness | Δ |
| No Bag | 2.0 | - |
| No Bag + MCP | 3.33 | 1.33 |
| PE/EVA 0P | 2.6 | 0.6 |
| PE/EVA 0P + MCP | 3.7 | 1.7 |
| PE/EVA 8P | 2.5 | 0.5 |
| PE/EVA 8P + MCP | 3.9 | 1.9 |
| Nylon 0.2 | 1.8 | -0.2 |
| Nylon 0.2 + MCP | 3.0 | 1.0 |
| Nylon 0.35 | 3.0 | 1.0 |
| Nylon 0.35 + MCP | 3.9 | 1.9 |

For the Pulp Firmness evaluation, the persimmons have the skin removed with a peeler and the pulp firmness is measured with a Manual Penetrometer with a probe of 8 mm.

The results above show that the persimmons treated by the method of the present invention have pulp firmness retention for a longer period of time than any previously known treatments.

## Claims

1. A method of handling persimmons comprising,
exposing the persimmons to an atmosphere that contains a cyclopropene compound, wherein the persimmons are in a modified-atmosphere package during exposure to the cyclopropene compound and the persimmons remain in the modified atmosphere package after the exposure for at least two hours and further wherein the modified-atmosphere package is constructed so that the transmission rate of oxygen for the entire package is from 200 to 40,000 cubic centimeters per day per kilogram of persimmons and the cyclopropene compound during the exposure is at a concentration between 10 ppb and 5 ppm by volume of the atmosphere.

2. The method of claim 1, wherein the persimmons remain in the modified atmosphere package after the exposure for at least ten hours.

3. The method of claim 1, wherein the cyclopropene compound is in a formulation with a molecular encapsulating agent.

4. The method of claim 1, wherein the cyclopropene compound comprises 1-methylcyclopropene (1-MCP).

5. The method of claim 3, wherein the molecular encapsulating agent comprises alpha-cyclodextrin.

6. The method of claim 1, wherein the persimmons are placed in the modified-atmosphere package within two hours after harvest.

7. A method of handling persimmons comprising,
exposing the persimmons to an atmosphere that contains a cyclopropene compound, wherein the persimmons are placed into a modified-atmosphere package within two hours after exposure to the cyclopropene compound, and the persimmons remain in the modified atmosphere package for at least two hours and further wherein the modified-atmosphere package is constructed so that the transmission rate of oxygen for the entire package is from 200 to 40,000 cubic centimeters per day per kilogram of persimmons and the cyclopropene compound during the exposure is at a concentration between 10 ppb and 5 ppm by volume of the atmosphere.

8. The method of claim 7, wherein the persimmons are placed into a modified-atmosphere package within four hours after exposure to the cyclopropene compound.

9. The method of claim 7, wherein the persimmons remain in the modified atmosphere package after the exposure for at least ten hours.

10. The method of claim 7, wherein the cyclopropene compound is in a formulation with a molecular encapsulating agent.

11. The method of claim 7, wherein the cyclopropene compound comprises 1-methylcyclopropene (1-MCP).

12. The method of claim 10, wherein the molecular encapsulating agent comprises alpha-cyclodextrin.

## Patentansprüche

1. Verfahren zur Handhabung von Kakis, umfassend:
Aussetzen der Kakis einer Atmosphäre, die eine Cyclopropenverbindung enthält, wobei sich die Kakis während dem sie der Cyclopropenverbindung ausgesetzt werden, in einer Verpackung unter Schutzatmosphäre befinden, und wobei die Kakis nach der Exposition mindestens zwei Stunden in der Verpackung unter Schutzatmosphäre verbleiben, und wobei die Verpackung unter Schutzatmosphäre ferner so gestaltet ist, dass die Sauerstoffübertragungsrate für die gesamte Verpackung zwischen 200 und 40.000 Kubikzentimeter pro Tag pro Kilogramm Kakis liegt, und wobei die Cyclopropenverbindung während der Exposition eine Konzentration zwischen 10 ppb und 5 ppm in dem Volumen der Atmosphäre aufweist.

2. Verfahren nach Anspruch 1, wobei die Kakis nach der Exposition mindestens zehn Stunden in der Verpackung unter Schutzatmosphäre verbleiben.

3. Verfahren nach Anspruch 1, wobei sich die Cyclopropenverbindung in einer Formulierung mit einem molekularen Verkapselungsstoff befindet.

4. Verfahren nach Anspruch 1, wobei die Cyclopropenverbindung 1-Methylcyclopropen (1-MCP) umfasst.

5. Verfahren nach Anspruch 3, wobei der molekulare Verkapselungsstoff Alpha-Cyclodextrin umfasst.

6. Verfahren nach Anspruch 1, wobei die Kakis innerhalb von zwei Stunden nach der Ernte in der Verpackung unter Schutzatmosphäre platziert werden.

7. Verfahren zur Handhabung von Kakis, umfassend:
Aussetzen der Kakis einer Atmosphäre, die eine Cyclopropenverbindung enthält, wobei die Kakis innerhalb von zwei Stunden nachdem sie der Cyclopropenverbindung ausgesetzt worden sind in einer Verpackung unter Schutzatmosphäre platziert werden, und wobei die Kakis mindestens zwei Stunden in der Verpackung unter Schutzatmosphäre verbleiben, und wobei die Verpackung unter Schutzatmosphäre ferner so gestaltet ist, dass die Sauerstoffübertragungsrate für die gesamte Verpackung zwischen 200 und 40.000 Kubikzentimeter pro Tag pro Kilogramm Kakis liegt, und wobei die Cyclopropenverbindung während der Exposition eine Konzentration zwischen 10 ppb und 5 ppm in dem Volumen der Atmosphäre aufweist.

8. Verfahren nach Anspruch 7, wobei die Kakis innerhalb von vier Stunden nachdem sie der Cyclopropenverbindung ausgesetzt worden sind in einer Verpackung unter Schutzatmosphäre platziert werden.

9. Verfahren nach Anspruch 7, wobei die Kakis nach der Exposition mindestens zehn Stunden in der Verpackung unter Schutzatmosphäre verbleiben.

10. Verfahren nach Anspruch 7, wobei sich die Cyclopropenverbindung in einer Formulierung mit einem molekularen Verkapselungsstoff befindet.

11. Verfahren nach Anspruch 7, wobei die Cyclopropenverbindung 1-Methylcyclopropen (1-MCP) umfasst.

12. Verfahren nach Anspruch 10, wobei der molekulare Verkapselungsstoff Alpha-Cyclodextrin umfasst.

## Revendications

1. Procédé de manipulation de kakis comprenant les étapes suivantes :
exposition des kakis à une atmosphère qui contient un composé de cyclopropène, les kakis se trouvant dans un emballage à atmosphère modifiée pendant l'exposition au composé de cyclopropène et les kakis restant dans l'emballage à atmosphère modifiée après l'exposition pendant au moins deux heures et en outre l'emballage à atmosphère modifiée étant construit de sorte que le taux de transmission d'oxygène pour l'emballage complet soit compris entre 200 et 40 000 centimètres cubes par jour et par kilogramme de kakis et le composé de cyclopropène pendant l'exposition étant à une concentration comprise entre 10 ppb et 5 ppm en volume de l'atmosphère.

2. Procédé selon la revendication 1, les kakis restant dans l'emballage à atmosphère modifiée après l'exposition pendant au moins dix heures.

3. Procédé selon la revendication 1, le composé de cyclopropène étant dans une formulation avec un agent d'encapsulation moléculaire.

4. Procédé selon la revendication 1, le composé de cyclopropène comprenant du 1-méthylcyclopropène (1-MCP).

5. Procédé selon la revendication 3, l'agent d'encapsulation moléculaire comprenant de l'alpha-cyclodextrine.

6. Procédé selon la revendication 1, les kakis étant placés dans l'emballage à atmosphère modifiée dans les deux heures suivant la récolte.

7. Procédé de manipulation de kakis comprenant les étapes suivantes :
exposition des kakis à une atmosphère qui contient un composé de cyclopropène, les kakis étant placés dans un emballage à atmosphère modifiée dans les deux heures après l'exposition au composé de cyclopropène, et les kakis restant dans l'emballage à atmosphère modifiée pendant au moins deux heures et en outre l'emballage à atmosphère modifiée étant construit de sorte que le taux de transmission d'oxygène pour l'emballage complet soit compris entre 200 et 40 000 centimètres cubes par jour et par kilogramme de kakis et le composé de cyclopropène pendant l'exposition étant à une concentration comprise entre 10 ppb et 5 ppm en volume de l'atmosphère.

8. Procédé selon la revendication 7, les kakis étant placés dans un emballage à atmosphère modifiée dans les quatre heures suivant l'exposition au composé de cyclopropène.

9. Procédé selon la revendication 7, les kakis restant dans l'emballage à atmosphère modifiée après l'exposition pendant au moins dix heures.

10. Procédé selon la revendication 7, le composé de cyclopropène étant dans une formulation avec un agent d'encapsulation moléculaire.

11. Procédé selon la revendication 7, le composé de cyclopropène comprenant du 1-méthylcyclopropène (1-MCP).

12. Procédé selon la revendication 10, l'agent d'encapsulation moléculaire comprenant de l'alpha-cyclodextrine.
